# EUROPÄISCHE PATENTANMELDUNG

(11) **EP 0 717 076 A1**
(43) Veröffentlichungstag der Anmeldung: **19.06.1996**
(21) Anmeldenummer: 95119093.3
(22) Anmeldetag: 05.12.1995
(51) Int. Cl.: C08L 23/10, C08K 5/3492

(54) **Flammgeschützte Kunststoffmassen**

(30) Priorität: 15.12.1994 DE 4444712; 15.12.1994 DE 4444713; 15.12.1994 DE 4444711
(71) Anmelder: BASF AKTIENGESELLSCHAFT, D-67056 Ludwigshafen (DE)
(72) Erfinder: Marczinke, Bernd Lothar, Dr., D-67346 Speyer (DE); Müller, Patrik, Dr., D-67661 Kaiserslautern (DE); Kössler, Ludwig, D-67269 Grünstadt (DE); Scherr, Günter, Dr., D-67065 Ludwigshafen (DE); Brosius, Sibylle, Dr., D-67071 Ludwigshafen (DE); Günther, Erhard, Dr., D-67454 Hassloch (DE); Hofmann, Jürgen, D-67069 Ludwigshafen (DE)

(57) **Zusammenfassung**

Kunststoffmassen mit einem Schmelzflußindex von 0,1 bis 100 g/10 min, bei 230°C und unter einem Gewicht von 2,16 kg, aus
a₁) einem Propylenhomopolymerisat mit einem Schmelzflußindex von 0,01 bis 100 g/10 min, bei 230°C und unter einem Gewicht von 2,16 kg oder
a₂) einem statistischen Propylencopolymerisat mit einpolymerisierten C₂-C₁₀-Alk-1-enen, wobei der Comonomerengehalt weniger als 15 Gew.-% beträgt oder
a₃) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist, oder
a₄) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt,
b) einem mit α,β-ethylenisch ungesättigten Carbonsäuren bzw. Carbonsäurederivaten gepfropftem Propylenpolymerisat oder Ethylenpolymerisat, welches einen Schmelzflußindex von 0,01 bis 400 g/10 min, bei 230°C und unter einem Gewicht von 2,16 kg und einen Gehalt an α,β-ethylenisch ungesättigten Carbonsäuren bzw. Carbonsäurederivaten von 0,1 bis 5 Gew.-% aufweist und
c) einer stickstoffhaltigen Verbindung der folgenden allgemeinen Formel (I) 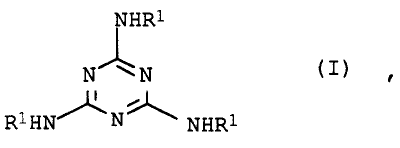 wobei die Reste R¹ gleich oder verschieden sein können und für Wasserstoff, ein C₁-C₃₀-Alkyl, ein mit einem oder mehreren Sauerstoffatomen und/oder Aminogruppen substituiertes C₂-C₃₀-Alkyl, ein mit einem oder mehreren Sauerstoffatomen und/oder Aminogruppen substituiertes C₂-C₃₀-Alk-1-enyl stehen oder aber einen Rest der allgemeinen Formel (II) bedeuten,

   H―O(̵CHR²―CHR²)̵ₘ (II) ,

   wobei die Reste R² gleich oder verschieden sein können und für Wasserstoff, ein C₁-C₄-Alkyl oder für eine Aminogruppe stehen und m eine ganze Zahl im Bereich von 1 bis 100 bedeutet.

## Beschreibung

Die vorliegende Erfindung betrifft Kunststoffmassen mit einem Schmelzflußindex von 0,1 bis 100 g/10 min, bei 230°C und unter einem Gewicht von 2,16 kg, aus
a₁) einem Propylenhomopolymerisat mit einem Schmelzflußindex von 0,01 bis 100 g/10 min, bei 230°C und unter einem Gewicht von 2,16 kg oder
a₂) einem statistischen Propylencopolymerisat mit einpolymerisierten C₂-C₁₀-Alk-1-enen, wobei der Comonomerengehalt weniger als 15 Gew.-% beträgt oder
a₃) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist oder
a₄) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt,
b) einem mit α,β-ethylenisch ungesättigten Carbonsäuren bzw. Carbonsäurederivaten gepfropftem Propylenpolymerisat oder Ethylenpolymerisat, welches einen Schmelzflußindex von 0,01 bis 400 g/10 min, bei 230°C und unter einem Gewicht von 2,16 kg und einen Gehalt an α,β-ethylenisch ungesättigten Carbonsäuren bzw. Carbonsäurederivaten von 0,1 bis 5 Gew.-% aufweist und
c) einer stickstoffhaltigen Verbindung der folgenden allgemeinen Formel (I) 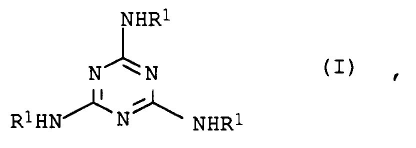 wobei die Reste R¹ gleich oder verschieden sein können und für Wasserstoff, ein C₁-C₃₀-Alkyl, ein mit einem oder mehreren Sauerstoffatomen und/oder Aminogruppen substituiertes C₂-C₃₀-Alkyl, ein mit einem oder mehreren Sauerstoffatomen und/oder Aminogruppen substituiertes C₂-C₃₀-Alk-1-enyl stehen oder aber einen Rest der allgemeinen Formel (II) bedeuten,

   H―O(̵CHR²―CHR²)̵ₘ (II) ,

   wobei die Reste R² gleich oder verschieden sein können und für Wasserstoff, ein C₁-C₄-Alkyl oder für eine Aminogruppe stehen und m eine ganze Zahl im Bereich von 1 bis 100 bedeutet.

Außerdem betrifft die vorliegende Erfindung ein Verfahren zur Herstellung dieser Kunststoffmassen sowie Folien, Fasern und Formkörper aus diesen Kunststoffmassen.

Es ist bekannt, durch Zusätze von geeigneten Flammschutzmitteln die Brennbarkeit von Polyolefinen zu reduzieren. Flammschutzmittel können in den Brennmechanismus entweder physikalisch durch Kühlen, Beschichten und Verdünnen oder chemisch durch Reaktion in der Gasphase oder in der festen Phase, beispielsweise durch Ausbildung einer schützenden Kohle- oder Ascheschicht eingreifen (K. Stoeckhert ''Kunststoff-Lexikon, Carl Hanser Verlag, München Wien 1981, 7. Auflage).

Durch Zusatz von halogenhaltigen Flammschutzmitteln in Gegenwart von Antimontrioxid und Phenolen ist es möglich, Polyolefine mit guten flammhemmenden Eigenschaften zu erhalten (JP-A 91/121149). Nachteilig an derartigen Systemen ist allerdings, daß im Brandfall Halogenwasserstoffe mit stark korrosiven Eigenschaften freigesetzt werden.

Es ist weiterhin bekannt, Metalloxide oder Metallhydroxide wie beispielsweise Magnesiumhydroxid als Flammschutzmittel bei Polyolefinen einzusetzen (JP-A 91/247660). Zur Erzielung guter flammhemmender Eigenschaften müssen aber in diesem Fall große Mengen derartiger anorganischer Füllstoffe zugesetzt werden, wodurch die mechanischen Eigenschaften der Polyolefine nachteilig beeinflußt werden.

In den japanischen Offenlegungsschriften JP-A 79/15952 und JP-A 88/291935 wird die Verwendung einer stickstoffhaltigen Verbindung, insbesondere von Melamin als Flammschutzmittel für Polypropylen beschrieben. Dabei zeigt es sich aber, daß die dabei erhaltenen Produkte im Vergleich zum nichtbehandelten Polypropylen nunmehr schlechtere mechanische Eigenschaften aufweisen.

Weiterhin ist der JP-A 90/247244 zu entnehmen, durch Zusatz von Mischungen stickstoffhaltiger Verbindungen wie Melamin mit rotem Phosphor oder organischen Phosphorverbindungen und mit Magnesiumoxysulfat zu Polypropylen dieses flammfest zu machen. Derartige Mischungen weisen aber u.a. den Nachteil auf, daß sie aufgrund der Zusätze an toxikologisch bedenklichen Stoffen wie Phosphor bzw. phosphororganischer Verbindungen technisch schwer zu handhaben sind.

Der vorliegenden Erfindung lag daher die Aufgabe zugrunde, den vorliegenden Mängeln abzuhelfen und ein flammfestes Polypropylen zu entwickeln, welches nach einem technisch einfachen Verfahren erhalten werden kann und darüber hinaus gute mechanische Eigenschaften aufweist.

Diese Aufgabe wurde durch die eingangs definierten Kunststoffmassen gelöst.

Die erfindungsgemäßen Kunststoffmassen weisen einen Schmelzflußindex von 0,1 bis 100 g/10 min, bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche Kunststoffmassen, deren Schmelzflußindex 0,1 bis 50 g/10 min, bei 230°C und unter einem Gewicht von 2,16 kg, beträgt.

Die erfindungsgemäßen Kunststoffmassen enthalten zum einen ein Propylenhomopolymerisat a₁) mit einem Schmelzflußindex von 0,01 bis 100 g/10 min, bei 230°C und unter einem Gewicht von 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche Kunststoffmassen, deren Propylenhomopolymerisat a₁) einen Schmelzflußindex von 0,1 bis 50 g/10 min, bei 230°C und unter einem Gewicht von 2,16 kg, aufweist.

Die Herstellung des erfindungsgemäß zu verwendenden Propylenhomopolymerisats a₁) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in einer Lösung oder einer Aufschlämmung durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem werden bei der Herstellung der titanhaltigen Feststoffkomponente in der Regel noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen verwendet. Bevorzugt werden als Elektronendonorverbindungen innerhalb der titanhaltigen Feststoffkomponente Phthalsäurederivate der allgemeinen Formel (III) 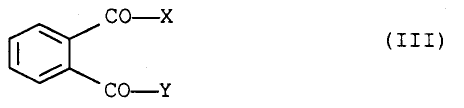
eingesetzt, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066, der US-A 5 288 824 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂·aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel (III) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (IV)

R³nSi(OR⁴)₄₋ₙ (IV),

wobei R³ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁴ gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R³ eine C₁- bis C₈-Alkylgruppe oder eine 5- bis 7-gliedrige Cycloalkylgruppe, R⁴ eine C₁- bis C₄-Alkylgruppe und n die Zahlen 1 oder 2 bedeuten.

Unter diesen Verbindungen sind Dimethoxydiisopropylsilan, Dimethoxyisopropylsek.butylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die erfindungsgemäß einzusetzenden Propylenhomopolymerisate a₁) hergestellt werden. Die Herstellung derartiger Propylenhomopolymerisate a₁) erfolgt dabei durch Polymerisation von Propylen aus der Gasphase heraus in einem oder mehreren hintereinander geschalteten Reaktoren.

Die Polymerisation des Propylens wird üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen vorzugsweise so, daß pro mmol der Aluminiumkomponente 0,05 bis 2 kg, bevorzugt 0,1 bis 1,5 kg, Propylenhomopolymerisat a₁) gebildet werden. Die Molmasse des Propylenhomopolymerisats a₁) kann durch die in der Polymerisationstechnik gebräuchlichen Regler, beispielsweise Wasserstoff kontrolliert werden. Zur Molmassenregelung werden bei der Polymerisation des Propylens auch gelegentlich geringe Mengen an weiteren C₂-C₁₀-Alk-1-enen, beispielsweise von Ethylen, But-1-en, Pent-1-en oder Hex-1-en eingesetzt. Dies hat zur Folge, daß in dem hergestellten Propylenhomopolymerisat a₁) noch bis zu 0,05 Gew.-%, vorzugsweise bis zu 0,02 Gew.-% an weiteren C₂-C₁₀-Alk-1-enen vorliegen können.

Weiterhin können die erfindungsgemäßen Kunststoffmassen ein statistisches Propylencopolymerisat a₂) mit einpolymerisierten C₂-C₁₀-Alk-1-enen enthalten, wobei der Comonomerengehalt weniger als 15 Gew.-% beträgt. Bevorzugt sind dabei solche statistischen Propylencopolymerisate a₂), bei denen der Comonomerengehalt weniger als 12 Gew.-% beträgt. Besonders bevorzugte Kunststoffmassen weisen ein solches statistisches Propylencopolymerisat a₂) auf, dessen Comonomerengehalt im Bereich von 1,0 bis 10 Gew.-% liegt. Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung der erfindungsgemäß zu verwendenden statistischen Propylencopolymerisate a₂) erfolgt üblicherweise in den gleichen Reaktoren und nach den gleichen Herstellungsverfahren, wie bereits bei der Herstellung der Propylenhomopolymerisate a₁) beschrieben. In bezug auf die dabei einzusetzenden Ziegler-Natta-Katalysatorsysteme sei ebenfalls auf die Herstellung der Propylenhomopolymerisate a₁) verwiesen.

Vorzugsweise sind die statistischen Propylencopolymerisate a₂) nach einem ein- oder mehrstufigen Verfahren erhältlich, wobei in der Gasphase Propylen mit einem oder mehreren C₂-C₁₀-Alk-1-enen bei Temperaturen von 60 bis 90°C, Drücken von 20 bis 40 bar und mittleren Verweilzeiten des Reaktionsgemisches von 1 bis 5 Stunden umgesetzt wird. Bevorzugt sind dabei Temperaturen von 65 bis 85°C, Drücke von 20 bis 35 bar und mittlere Verweilzeiten von 1,5 bis 4 Stunden. Üblicherweise liegen dabei die Comonomere Propylen und das oder die C₂-C₁₀-Alk-1-ene in solchen Mengen vor, daß das Partialdruckverhältnis zwischen Propylen und dem oder den C₂-C₁₀-Alk-1-enen 5:1 bis 100:1, insbesondere 5:1 bis 50:1 beträgt. Zur Molmassenregelung können dabei auch Regler wie beispielsweise Wasserstoff eingesetzt werden.

Die auf diese Weise erhältlichen statistischen Propylencopolymerisate a₂) weisen einen Schmelzflußindex von 0,1 bis 100 g/10 min, insbesondere von 0,1 bis 50 g/10 min auf. Der Schmelzflußindex entspricht dabei derjenigen Menge an Polymerisat, die innerhalb von 10 Minuten und bei einer Temperatur von 230°C aus der nach DIN 53 735 genormten Prüfvorrichtung ausgepreßt wird.

Die erfindungsgemäßen Kunststoffmassen können auch ein Polymerisat a₃) enthalten, aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist. Bevorzugt sind dabei solche Kunststoffmassen, deren Polymerisat a₃) 35 bis 95 Gew.-% eines Propylencopolymerisats (I) mit 0,2 bis 12 Gew.-% einpolymerisierter C₂-C₁₀-Alk-1-ene und 5 bis 65 Gew.-% eines Propylencopolymerisats (II) mit 20 bis 75 Gew.-% einpolymerisierter C₂-C₁₀-Alk-1-ene enthält. Unter diesen Kunststoffmassen werden solche besonders bevorzugt eingesetzt, deren Polymerisat a₃) aus 40 bis 93 Gew.-% eines Propylencopolymerisats (I) mit 0,3 bis 9 Gew.-% einpolymerisierter C₂-C₁₀-Alk-1-ene und aus 7 bis 60 Gew.-% eines Propylencopolymerisats (II) mit 25 bis 70 Gew.-% einpolymerisierter C₂-C₁₀-Alk-1-ene besteht.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung der erfindungsgemäß zu verwendenden Polymerisate a₃), erfolgt üblicherweise in den gleichen Reaktoren und nach den gleichen Herstellungsverfahren, wie bereits bei der Herstellung der Propylenhomopolymerisate a₁) beschrieben. In bezug auf die dabei einzusetzenden Ziegler-Natta-Katalysatorsysteme sei ebenfalls auf die Herstellung der Propylenhomopolymerisate a₁) verwiesen.

Die Polymerisate a₃) sind insbesondere nach einem zweistufigen Verfahren erhältlich. Dabei wird in der Gasphase zunächst in einer ersten Polymerisationsstufe das Propylencopolymerisat (I), und daran anschließend in einer zweiten Polymerisationsstufe das Propylencopolymerisat (II) produziert.

Die Copolymerisation des Propylens und der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als C₂-C₁₀-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (II) hergestellt wird.

Dies erfolgt in der zweiten Polymerisationsstufe dadurch, daß in Anwesenheit des Propylencopolymerisats (I) Propylen zusammen mit einem oder mehreren C₂-C₁₀-Alk-1-enen bei Drücken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Copolymerisats (II) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a₃) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und einem Gewicht von 2,16 kg aus der nach DIN 53 735 genormten Prüfvorrichtung ausgetragen wird.

Weiterhin kann in den erfindungsgemäßen Kunststoffmassen auch ein Polymerisat a₄) enthalten sein, aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt. Bevorzugt sind dabei Kunststoffmassen, deren Polymerisat a₄) aus 35 bis 95 Gew.-% eines Propylenhomopolymerisats und 5 bis 65 Gew.-% eines Propylencopolymerisats besteht, wobei der Comonomerengehalt 20 bis 75 Gew.-%, bezogen auf die letztere Komponente beträgt. Besonders bevorzugte Kunststoffmassen enthalten ein Polymerisat a₄) aus 40 bis 93 Gew.-% eines Propylenhomopolymerisats und 7 bis 60 Gew.-% eines Propylencopolymerisats. In diesem Fall liegt der Comonomerengehalt bei 25 bis 70 Gew.-%, bezogen auf die letztere Komponente. Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung der erfindungsgemäß ebenfalls zu verwendenden Polymerisate a₄) erfolgt üblicherweise in den gleichen Reaktoren und nach den gleichen Herstellungsverfahren, wie bereits bei der Herstellung der Propylenhomopolymerisate a₁) beschrieben. Was die dabei einzusetzenden Ziegler-Natta-Katalysatorsysteme betrifft, so sei ebenfalls auf die Herstellung der Polymerisate a₁) verwiesen.

Die Polymerisate a₄) sind insbesondere nach einem zweistufigen Verfahren erhältlich. Dabei wird aus der Gasphase heraus in einer ersten Polymerisationsstufe Propylen polymerisiert und dem daraus erhältlichen Propylenhomopolymerisat in einer zweiten Polymerisationsstufe ein Gemisch aus Propylen und einem oder mehreren C₂-C₁₀-Alk-1-enen hinzupolymerisiert.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen vorzugsweise so, daß in der ersten Polymerisationsstufe pro mmol der Aluminiumkomponente 0,05 bis 2 kg, bevorzugt 0,1 bis 1,5 kg, Propylenhomopolymerisat gebildet werden. Zur Molmassenregelung können die bei der Polymerisation von Alk-1-enen üblichen Regler, beispielsweise Wasserstoff mitverwendet werden.

Dieses Propylenhomopolymerisat wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren C₂-C₁₀-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten C₂-C₁₀-Alk-1- enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Weiterhin enthalten die erfindungsgemäßen, flammgeschützten Kunststoffmassen ein mit α,β-ethylenisch ungesättigten Carbonsäuren bzw. Carbonsäurederivaten gepfropftes Propylenpolymerisat oder Ethylenpolymerisat b), welches einen Schmelzflußindex von 0,01 bis 400 g/10 min, bei 230⁰C und unter einem Gewicht von 2,16 kg und einen Gehalt an α,β-ethylenisch ungesättigten Carbonsäuren bzw. Carbonsäurederivaten von 0,1 bis 5 Gew.-% aufweist. Bevorzugt sind dabei solche gepfropften Polymerisate b) mit einem Schmelzflußindex von 0,1 bis 200 g/10 min, bei 230°C und unter Gewicht von 2,16 kg, nach DIN 53 735, die 0,2 bis 2 Gew.-% an α,β-ethylenisch ungesättigten Carbonsäuren bzw. Carbonsäurederivaten aufweisen.

Unter den Bezeichnungen Propylenpolymerisat oder Ethylenpolymerisat sollen dabei neben den jeweiligen Homopolymerisaten auch die entsprechenden Copolymerisate mit untergeordneten Anteilen anderer C₂-C₁₀-Alk-1-ene verstanden werden, beispielsweise Copolymerisate, die neben Propylen auch untergeordnete Anteile an Ethylen, But-1-en, Pent-1-en, Hex-1-en, Hept-1-en oder Oct-1-en aufweisen, oder aber Copolymerisate, die neben Ethylen noch untergeordnete Anteile an Propylen, But-1-en, Pent-1-en, Hex-1-en, Hept-1-en oder Oct-1-en enthalten. Derartige Copolymerisate können neben Propylen bzw. Ethylen auch mehrere verschiedene C₂-C₁₀-Alk-1-ene aufweisen. Als Polymerisate b) werden vorzugsweise Propylenhomopolymerisate oder Propylencopolymerisate mit 0,1 bis 50 Gew.-%, insbesondere mit 0,2 bis 45 Gew.-% an einpolymerisiertem Ethylen verwendet.

Die Herstellung derartiger Propylenhomo- oder -copolymerisate erfolgt vorzugsweise durch Polymerisation mit Hilfe von Ziegler-Natta-Katalysatorsystemen, analog zur Herstellung des Polymerisats a₁), so daß sich weitere Angaben diesbezüglich erübrigen.

Die Herstellung der entsprechenden Ethylenpolymerisate kann sowohl in einer Suspension als auch in der Gasphase in üblichen Polymerisationsreaktoren durchgeführt werden. Dabei kann sowohl kontinuierlich als auch diskontinuierlich, im gerührten oder im gewirbelten Festbett, bei Temperaturen von 50 bis 120°C, insbesondere von 80 bis 120°C und Drücken von 5 bis 50 bar, insbesondere von 20 bis 40 bar polymerisiert werden.

Die Herstellung der Ethylenpolymerisate wird üblicherweise mit Hilfe von titan- und aluminiumhaltigen Ziegler-Katalysatoren oder durch Phillips-Katalysatoren auf der Basis von chromhaltigen Verbindungen durchgeführt, wobei Phillips-Katalysatoren bevorzugt verwendet werden. Beispiele für besonders geeignete Phillips-Katalysatoren sind u.a. aus der EP-A 429 937 und der DE-A 41 32 894 bekannt. Bei diesen Phillips-Katalysatoren verwendet man üblicherweise Chromtrioxid, welches auf einem metallischen Träger aufgebracht ist.

Die gepfropften Polymerisate b) enthalten 0,1 bis 5 Gew.-%, insbesondere 0,2 bis 2 Gew.-% eines sogenannten Pfropfmonomeren, wobei als solches α,β-ungesättigte Carbonsäuren bzw. Carbonsäurederivate verwendet werden. Unter α,β-ungesättigten Carbonsäuren bzw. Carbonsäurederivaten sollen dabei die üblichen mit Propylen oder Ethylen copolymerisierten Carbonsäuren sowie deren Ester-, Anhydrid- oder Amidderivate verstanden werden. Bevorzugt werden u.a. Maleinsäure, Fumarsäure, Itaconsäure, Acrylsäure, Crotonsäure oder deren Anhydride eingesetzt, wobei Maleinsäureanhydrid besonders geeignet ist.

Die Herstellung der gepfropften Polymerisate b) erfolgt vorzugweise dadurch, daß man bei Drücken von 1 bis 500 bar, vorzugsweise bei Drücken von 1 bis 300 bar, 0,1 bis 5,0 Gew.-%, bezogen auf das Propylenpolymerisat oder das Ethylenpolymerisat, des Pfropfmonomeren, dem aufgeschmolzenen Propylenpolymerisat bzw. Ethylenpolymerisat hinzumischt und die Pfropfreaktion bei Temperaturen von 200 bis 350°C durchführt. Vorzugsweise wird das Pfropfmonomer dabei in Konzentrationen von 0,2 bis 2,0 Gew.-%, jeweils bezogen auf das Propylenpolymerisat oder das Ethylenpolymerisat, eingesetzt. Die Pfropfreaktion läßt sich vorteilhaft bei Temperaturen von 210 bis 290°C und Verweilzeiten von 0,5 bis 10 Minuten, insbesondere von 0,5 bis 5 Minuten, durchführen.

Es ist möglich, die Herstellung der gepfropften Polymerisate b) sowohl in Anwesenheit als auch in Abwesenheit von radikalisch zerfallenden Initiatoren, beispielsweise von organischen Peroxiden, durchzuführen. Dabei können die in der Kunststofftechnik üblichen Reaktoren, beispielsweise Extruder oder Brabender-Mischer eingesetzt werden. Besonders gut eignen sich dabei Zweischneckenextruder. Die auf diese Weise erhältlichen gepfropften Polymerisate b) enthalten üblicherweise 0,1 bis 5,0 Gew.-%, insbesondere 0,2 bis 2,0 Gew.-%, des Pfropfmonomeren.

Darüber hinaus weisen die erfindungsgemäßen Kunststoffmassen noch eine stickstoffhaltige Verbindung c) der folgenden allgemeinen Formel (I) auf, 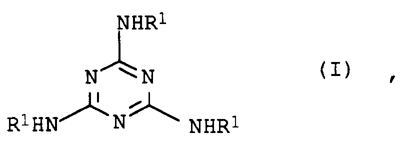
wobei die Reste R¹ gleich oder verschieden sein können und für Wasserstoff, ein C₁-C₃₀-Alkyl, ein mit einem oder mehreren Sauerstoffatomen und/oder Aminogruppen substituiertes C₂-C₃₀-Alkyl, ein mit einem oder mehreren Sauerstoffatomen und/oder Aminogruppen substituiertes C₂-C₃₀-Alk-1-enyl stehen oder aber einen Rest der allgemeinen Formel (II) bedeuten,

H―O(̵CHR²―CHR²)̵ₘ (II) ,

wobei die Reste R² gleich oder verschieden sein können und für Wasserstoff, ein C₁-C₄-Alkyl oder für eine Aminogruppe stehen und m eine ganze Zahl im Bereich von 1 bis 100 bedeutet.

Bevorzugt verwendete stickstoffhaltige Verbindungen c) sind solche Verbindungen c) der folgenden allgemeinen Formel (I) 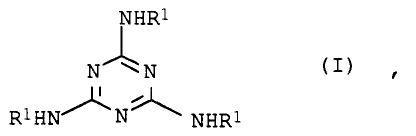
in der die Reste R¹ für Wasserstoff, ein C₁-C₁₀-Alkyl, ein mit einem oder mehreren Sauerstoffatomen und/oder Aminogruppen substituiertes C₂-C₁₀-Alkyl stehen oder aber einen Rest der allgemeinen Formel (II) bedeuten,

H―O(̵CHR²―CHR²)̵ₘ (II) ,

wobei die Reste R² für Wasserstoff oder für eine Aminogruppe stehen und m eine ganze Zahl im Bereich von 1 bis 25 bedeutet.

Unter diesen stickstoffhaltigen Verbindungen c) ist wiederum eine solche Verbindung c) besonders bevorzugt, bei der in der allgemeinen Formel (I) R¹ für Wasserstoff steht. Dabei handelt es sich um das handelsübliche Produkt Melamin. Das Melamin kann sowohl alleine als auch als Addukt mit 1,3,5-Triazin-2,4,6-triol, der Cyanursäure, eingesetzt werden. Bevorzugt ist dabei auch die Verwendung des Melamins in Form des 1:1-Adduktes mit der Cyanursäure.

Weitere bevorzugt eingesetzte stickstoffhaltige Verbindungen c) sind u.a. die Umsetzungsprodukte von Melamin oder Derivaten des Melamins mit organischen oder anorganischen Säuren.

Derartige stickstoffhaltige Verbindungen c) können nach üblichen Synthesemethoden der organischen Chemie hergestellt werden (EP-A 225 433; EP-A 408 947). Darüber hinaus sind sie auch im Handel erhältlich.

Die erfindungsgemäßen Kunststoffmassen enthalten üblicherweise
20 bis 70 Gew.-% Polymerisat a₁) oder a₂) oder a₃) oder a₄),
1 bis 10 Gew.-% gepfropftes Polymerisat b) und
20 bis 70 Gew.-% der stickstoffhaltigen Verbindung c).

Bevorzugt sind dabei solche Kunststoffmassen, die
30 bis 60 Gew.-% Polymerisat a₁) oder a₂) oder a₃) oder a₄),
1,5 bis 8 Gew.-% gepfropftes Polymerisat b) und
30 bis 60 Gew.-% der stickstoffhaltigen Verbindung c).
aufweisen.

Die erfindungsgemäßen Kunststoffmassen sind erhältlich durch Umsetzung des Polymerisats a₁) oder a₂) oder a₃) oder a₄) mit dem gepfropften Polymerisat b) und der stickstoffhaltigen Verbindung c) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190°C bis 260°C, Drücke von 1 bis 60 bar und mittlere Verweilzeiten von 0,2 bis 5 Minuten. Die Umsetzung der einzelnen Komponenten miteinander erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern. Die Umsetzung kann sowohl in Anwesenheit als auch in Abwesenheit von radikalisch zerfallenden Initiatoren, beispielsweise von organischen Peroxiden, erfolgen. Bevorzugt arbeitet man aber ohne radikalisch zerfallende Initiatoren.

Zur Herstellung der erfindungsgemäßen Kunststoffmassen verwendet man vorzugsweise 20 bis 70 Gew.-%, insbesondere 30 bis 60 Gew.-% des Polymerisats a₁) oder a₂) oder a₃) oder a₄), 1 bis 10 Gew.-%, insbesondere 1,5 bis 8 Gew.-% des gepfropften Polymerisats b) und 20 bis 70 Gew.-%, insbesondere 30 bis 60 Gew.-% der stickstoffhaltigen Verbindung c).

Die erfindungsgemäßen Kunststoffmassen zeichnen sich durch eine hohe Flammfestigkeit und gute mechanische Eigenschaften, insbesondere durch eine hohe Bruchdehnung aus. Sie sind farb- und geruchlos und können nach einem technisch wenig aufwendigen Verfahren hergestellt werden. Die erfindungsgemäßen Kunststoffmassen eignen sich insbesondere zur Herstellung von Folien, Fasern und Formkörpern.

### Beispiele

Die Beispiele 1 bis 6 sowie die Vergleichsbeispiele A bis E wurden auf einem Zweischneckenextruder ZSK 40 der Firma Werner & Pfleiderer mit einem Längen/Durchmesser-Verhältnis von 33 durchgeführt. Die dabei verwendeten Polymerisate a₁) bzw. a₂) bzw. a₃) bzw. a₄) und die gepfropften Polymerisate b) wurden als Grieß oder Granulat dem Zweischneckenextruder zugeführt und dort mit der stickstoffhaltigen Verbindung c) gemischt.

### Beispiel 1

53 Gew.-Teile eines Propylenhomopolymerisats a₁) mit einem Schmelzflußindex von 5,0 g/10 min, bei 230°C und 2,16 kg [nach DIN 53 735] wurden im Zweischneckenextruder mit 2 Gew.-Teilen eines gepfropften Polymerisats b) und 45 Gew.-Teilen Melamin vermischt und extrudiert. Als gepfropftes Polymerisat b) wurde ein Propylen-Ethylen-Copolymerisat mit einem Ethylengehalt von 2 Gew.-% und einem Schmelzflußindex von 22 g/10 min, bei 190°C und 1,2 kg [nach ASTMD 1238] verwendet, welches 0,4 Gew.-% gepfropftes Maleinsäureanhydrid enthielt. Der Druck betrug dabei 100 bar, die Temperatur 200°C und die mittlere Verweilzeit 30 Sekunden. Danach wurde das Gemisch aus dem Zweischneckenextruder ausgetragen und granuliert. Das erhaltene Produkt war farb- und geruchlos.

### Vergleichsbeispiel A

55 Gew.-Teile des im Beispiel 1 verwendeten Propylenhomopolymerisats a₁) und 45 Gew.-Teile Melamin wurden unter den Bedingungen des Beispiel 1 ohne Zusatz des gepfropften Polymerisats b) aufgearbeitet.

### Beispiel 2

53 Gew.-Teile eines statistischen Propylenhomopolymerisats a₂) mit einem Schmelzflußindex von 5,0 g/10 min, bei 230°C und 2,16 kg [nach DIN 53 735] und 3,0 Gew.-% einpolymerisiertem Ethylen [bestimmt durch Fourier-Infrarotspektroskopie] wurden im Zweischneckenextruder mit 2 Gew.-Teilen eines gepfropften Polymerisats b) und 45 Gew.-Teilen Melamin vermischt und extrudiert. Als gepfropftes Polymerisat b) wurde ein Propylen-Ethylen-Copolymerisat mit einem Ethylengehalt von 2 Gew.-% und einem Schmelzflußindex von 22 g/10 min, bei 190°C und 1,2 kg [nach ASTMD 1238] verwendet, welches 0,4 Gew.-% gepfropftes Maleinsäureanhydrid enthielt. Der Druck betrug dabei 100 bar, die Temperatur 200°C und die mittlere Verweilzeit 30 Sekunden. Danach wurde das Gemisch aus dem Zweischneckenextruder ausgetragen und granuliert. Das erhaltene Produkt war farb- und geruchlos.

### Vergleichsbeispiel B

55 Gew.-Teile des im Beispiel 2 verwendeten statistischen Propylenhomopolymerisats a₂) und 45 Gew.-Teile Melamin wurden unter den Bedingungen des Beispiel 2 ohne Zusatz des gepfropften Polymerisats b) aufgearbeitet.

Der Schmelzflußindex und die Bruchdehnung der auf diese Weise erhaltenen Kunststoffmassen sind in der nachstehenden Tabelle 1 aufgeführt.

**Tabelle 1**

| | **Beispiel 1** | **Beispiel 2** | **Vergleichsbeispiel A** | **Vergleichsbeispiel B** |
|---|---|---|---|---|
| Schmelzflußindex a) [g/10 min] | 3,3 | 3,6 | 3,8 | 3,9 |
| Bruchdehnung b) [%] | 25 | 38 | 5 | 7 |
| Brandklasse c) | V-2 | V-2 | V-2 | V-2 |
| a) analog DIN 53 735, bei 230°C und unter einem Gewicht von 2,16 kg b) Bruchdehnung, nach ISO 527 c) Brandverhalten, bestimmt nach UL-Standard 94, mit einem Probekörper der Länge 1,6 mm; V-2 bedeutet mäßig entflammbar | | | | |

### Beispiel 3

Aus dem letzten Autoklaven der Kaskade wurde ein Polymerisat a₃) ausgetragen, welches aus 58 Gew.-Teilen eines Propylen-Ethylenpolymerisats (I) mit 3,8 Gew.-Teilen einpolymerisiertem Ethylen und 42 Gew.-% eines Propylen-Ethylen-Copolymerisats (II) mit 60 Gew.-% einpolymerisiertem Ethylen bestand und einem Schmelzflußindex von 1,0 g/10 min [bei 230°C und 2,16 kg, nach DIN 53 735] aufwies. 53 Gew.-Teile dieses Polymerisats a) wurden im Zweischneckenextruder mit 2 Gew.-Teilen eines gepfropften Polymerisats b) und 45 Gew.-Teilen Melamin vermischt und extrudiert. Als gepfropftes Polymerisat b) verwendete man ein Propylen-Ethylen-Copolymerisat mit einem Ethylengehalt von 2 Gew.-% und einem Schmelzflußindex von 22 g/10 min [bei 230°C und 2,16 kg, nach DIN 53 735], welches 0,4 Gew.-% gepfropftes Maleinsäureanhydrid enthielt. Bei der Umsetzung der Polymerisate a₃) und b) mit der stickstoffhaltigen Verbindung c) betrug der Druck 100 bar, die Temperatur 200°C und die mittlere Verweilzeit 30 Sekunden. Danach wurde das Gemisch aus dem Zweischneckenextruder ausgetragen und granuliert. Das erhaltene Produkt war farb- und geruchlos.

### Vergleichsbeispiel C

55 Gew.-Teile des im Beispiel 3 verwendeten Polymerisats a₃) wurden unter den gleichen Bedingungen des Beispiels 3, aber ohne Zusatz des gepfropften Polymerisats b) mit 45 Gew.-Teilen Melamin umgesetzt.

Der Schmelzflußindex und die Bruchdehnung der auf diese Weise erhaltenen Kunststoffmassen sind in der nachstehenden Tabelle 2 aufgeführt.

**Tabelle 2**

| | **Beispiel 3** | **Vergleichsbeispiel C** |
|---|---|---|
| Schmelzflußindex a) [g/10 min] | 0,6 | 0,9 |
| Bruchdehnung b) [%] | 440 | 210 |
| Brandklasse c) | V-2 | V-2 |
| a) analog DIN 53 735, bei 230°C und unter einem Gewicht von 2,16 kg b) Bruchdehnung, nach ISO 527 c) Brandverhaltenl, bestimmt nach UL-Standard 94, mit einem Probekörper der Länge 1,6 mm; V-2 bedeutet mäßig entflammbar | | |

### Beispiel 4

53,5 Gew.-Teile eines Propylenpolymerisats a₄) aus 72 Gew.-Teilen Propylenhomopolymerisat und 28 Gew.-Teilen Propylen-Ethylencopolymerisat [bestimmt durch Extraktionsfraktionierung nach W. Holtrup, Makromol. Chem. 178, 2335 (1977)], einem Ethylengehalt von 46 Gew.-%, bezogen auf die letztere Komponente [bestimmt durch Infrarotspektroskopie] und einem Schmelzflußindex von 5 g/10 min [bei 230°C und 2,16 kg, nach DIN 53 735] wurden im Zweischneckenextruder mit 1,5 Gew.-Teilen eines gepfropften Polymerisats b) und 45 Gew.-Teilen Melamin vermischt und extrudiert. Als gepfropftes Polymerisat b) wurde ein Propylen-Ethylen-Copolymerisat mit einem Ethylengehalt von 2 Gew.-% und einem Schmelzflußindex von 22 g/10 min [bei 230°C und 2,16 kg, nach DIN 53 735] verwendet, welches 0,4 Gew.-% gepfropftes Maleinsäureanhydrid enthielt. Der Druck betrug dabei 100 bar, die Temperatur 200°C und die mittlere Verweilzeit 30 Sekunden. Danach wurde das Gemisch aus dem Zweischneckenextruder ausgetragen und granuliert. Das erhaltene Produkt war farb- und geruchlos.

### Beispiel 5

53 Gew.-Teile des im Beispiel 4 verwendeten Propylenpolymerisates a₄) wurden unter den gleichen Bedingungen wie im Beispiel 4 mit 2 Gew.-Teilen des gepfropften Polymerisats b) und 45 Gew.-Teilen Melamin vermischt und entsprechend aufgearbeitet. Das erhaltene Produkt war farb- und geruchlos.

### Vergleichsbeispiel D

55 Gew.-Teile des im Beispiel 4 verwendeten Propylenpolymerisats a₄) und 45 Gew.-Teile Melamin wurden unter den Bedingungen des Beispiels 4 ohne Zusatz des gepfropften Polymerisats b) aufgearbeitet.

### Beispiel 6

53 Gew.-Teile eines Propylenpolymerisats a₄) aus 67 Gew.-Teilen Propylenhomopolymerisat und 33 Gew.-Teilen Propylen-Ethylencopolymerisat [bestimmt durch Extraktionsfraktionierung nach W. Holtrup, Makromol. Chem. 178, 2335 (1977)], einem Ethylengehalt von 48 Gew.-%, bezogen auf die letztere Komponente [bestimmt durch Infrarotspektroskopie] und einem Schmelzflußindex von 3,5 g/10 min [bei 230°C und 2,16 kg, nach DIN 53 735] wurden im Zweischneckenextruder mit 2 Gew.-Teilen des gleichen gepfropften Polymerisats b) wie im Beispiel 4 und 45 Gew.-Teilen Melamin vermischt und extrudiert. Die Temperatur betrug dabei 200°C, der Druck 100 bar und die mittlere Verweilzeit 30 Sekunden. Danach wurde das Gemisch aus dem Zweischneckenextruder ausgetragen und granuliert. Das erhaltene Produkt war farb- und geruchlos.

### Vergleichsbeispiel E

55 Gew.-Teile des im Beispiel 6 verwendeten Propylenpolymerisats a₄) und 45 Gew.-Teile Melamin wurden unter den Bedingungen des Beispiels 6 ohne Zusatz des gepfropften Polymerisats b) aufgearbeitet.

Der Schmelzflußindex und die Bruchdehnung der auf diese Weise erhaltenen Kunststoffmassen sind in der nachstehenden Tabelle 3 aufgeführt.

**Tabelle 3**

| | **Beispiel 4** | **Beispiel 5** | **Beispiel 6** | **Vergleichsbeispiel D** | **Vergleichsbeispiel E** |
|---|---|---|---|---|---|
| Schmelzflußindex a) [g/10 min] | 3,1 | 2,9 | 1,4 | 3,4 | 1,8 |
| Bruchdehnung b) [%] | 80 | 125 | 200 | 14 | 45 |
| Brandklasse c) | V-2 | V-2 | V-2 | V-2 | V-2 |
| a) analog DIN 53 735, bei 230°C und unter einem Gewicht von 2,16 kg b) Bruchdehnung, nach ISO 527 c) Brandverhalten, bestimmt nach UL-Standard 94, mit einem Probekörper der Länge 1,6 mm; V-2 bedeutet mäßig entflammbar | | | | | |

Die erfindungsgemäßen Kunststoffmassen sind nur mäßig entflammbar und weisen u.a. eine deutlich verbesserte Bruchdehnung auf.

## Patentansprüche

1. Kunststoffmassen mit einem Schmelzflußindex von 0,1 bis 100 g/10 min, bei 230°C und unter einem Gewicht von 2,16 kg, aus
a₁) einem Propylenhomopolymerisat mit einem Schmelzflußindex von 0,01 bis 100 g/10 min, bei 230°C und unter einem Gewicht von 2,16 kg oder
a₂) einem statistischen Propylencopolymerisat mit einpolymerisierten C₂-C₁₀-Alk-1-enen, wobei der Comonomerengehalt weniger als 15 Gew.-% beträgt oder
a₃) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist oder
a₄) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt,
b) einem mit α,β-ethylenisch ungesättigten Carbonsäuren bzw. Carbonsäurederivaten gepfropftem Propylenpolymerisat oder Ethylenpolymerisat, welches einen Schmelzflußindex von 0,01 bis 400 g/10 min, bei 230°C und unter einem Gewicht von 2,16 kg und einen Gehalt an α,β-ethylenisch ungesättigten Carbonsäuren bzw. Carbonsäurederivaten von 0,1 bis 5 Gew.-% aufweist und
c) einer stickstoffhaltigen Verbindung der folgenden allgemeinen Formel (I) 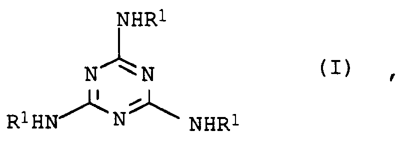 wobei die Reste R¹ gleich oder verschieden sein können und für Wasserstoff, ein C₁-C₃₀-Alkyl, ein mit einem oder mehreren Sauerstoffatomen und/oder Aminogruppen substituiertes C₂-C₃₀-Alkyl, ein mit einem oder mehreren Sauerstoffatomen und/oder Aminogruppen substituiertes C₂-C₃₀-Alk-1-enyl stehen oder aber einen Rest der allgemeinen Formel (II) bedeuten,
H―O(̵CHR²―CHR²)̵ₘ (II) ,
wobei die Reste R² gleich oder verschieden sein können und für Wasserstoff, ein C₁-C₄-Alkyl oder für eine Aminogruppe stehen und m eine ganze Zahl im Bereich von 1 bis 100 bedeutet.

2. Kunststoffmassen nach Anspruch 1, wobei das Propylenhomopolymerisat a₁) eingesetzt wird.

3. Kunststoffmassen nach Anspruch 1, wobei das statistische Propylencopolymerisat a₂) eingesetzt wird.

4. Kunststoffmassen nach Anspruch 1, wobei das Polymerisat a₃) eingesetzt wird.

5. Kunststoffmassen nach Anspruch 1, wobei das Polymerisat a₄) eingesetzt wird.

6. Kunststoffmassen nach den Ansprüchen 1 bis 5, wobei das Polymerisat b) 0,1 bis 5 Gew.-% gepfropftes Maleinsäureanhydrid aufweist.

7. Kunststoffmassen nach den Ansprüchen 1 bis 6, wobei als stickstoffhaltige Verbindung c) eine solche Verbindung der folgenden allgemeinen Formel (I) verwendet wird 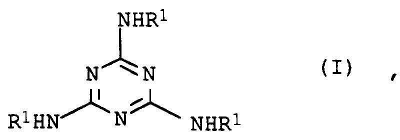 in der die Reste R¹ für Wasserstoff, ein C₁-C₁₀-Alkyl, ein mit einem oder mehreren Sauerstoffatomen und/oder Aminogruppen substituiertes C₂-C₁₀-Alkyl stehen oder aber einen Rest der allgemeinen Formel (II) bedeuten,
H―O(̵CHR²―CHR²)̵ₘ (II) ,
wobei die Reste R² für Wasserstoff oder für eine Aminogruppe stehen und m eine ganze Zahl im Bereich von 1 bis 25 bedeutet.

8. Kunststoffmassen nach Anspruch 7, wobei als stickstoffhaltige Verbindung c) eine solche Verbindung der allgemeinen Formel (I) verwendet wird, in der die Reste R¹ für Wasserstoff stehen.

9. Kunststoffmassen nach einem der Ansprüche 1 bis 8, enthaltend
20 bis 70 Gew.-% Polymerisat a₁) oder a₂) oder a₃) oder a₄)
1 bis 10 Gew.-% gepfropftes Polymerisat b) und
20 bis 70 Gew.-% der stickstoffhaltigen Verbindung c).

10. Verfahren zur Herstellung von Kunststoffmassen gemäß den Ansprüchen 1 bis 9, dadurch gekennzeichnet, daß das Polymerisat a₁) oder a₂) oder a₃) oder a₄), das gepfropfte Polymerisat b) und die stickstoffhaltige Verbindung c) bei Temperaturen von 180 bis 280°C, Drücken von 1 bis 100 bar und mittleren Verweilzeiten des Reaktionsgemisches von 0,2 bis 10 Minuten miteinander umgesetzt werden.

11. Folien, Fasern und Formkörper aus den Kunststoffmassen nach den Ansprüchen 1 bis 9.
